# EUROPÄISCHE PATENTANMELDUNG

(11) **EP 3 693 820 A1**
(43) Veröffentlichungstag der Anmeldung: **12.08.2020**
(21) Anmeldenummer: 19155985.5
(22) Anmeldetag: 07.02.2019
(51) Int. Cl.: G05B 19/418

(54) **VERFAHREN ZUR HERSTELLUNG EINES FERTIGTEILS AUS EINEM ROHLING**

(71) Anmelder: ARRTSM GMBH, 72135 Dettenhausen (DE)
(72) Erfinder: Gauli, Yudhisthir, 72135 Dettenhausen (DE)
(74) Vertreter: Späth, Dieter

(57) **Zusammenfassung**

Die Erfindung schlägt vor, Fertigteile für ein Fertigprodukt vollautomatisch aus Rohlingen herzustellen, die aus einem Lager entnommen und mit automatisch festgelegten Werkzeugen in Bearbeitungsstationen einer Fertigungsstraße in einer festgelegten Bearbeitungsreihenfolge zu den Fertigteilen bearbeitet werden.

## Beschreibung

Die Erfindung betrifft ein Verfahren zur Herstellung eines Fertigteils aus einem Rohling mit den Merkmalen des Oberbegriffs des Anspruchs 1.

Aufgabe der Erfindung ist eine vollständig oder jedenfalls weitestgehend automatische Herstellung des Fertigteils.

Die Erfindung sieht vor, dass zunächst Eigenschaften des Fertigteils festgelegt werden. Das geschieht beispielsweise, indem ein Fertigprodukt, das das Fertigteil enthält, ausgewählt wird. Mit der Auswahl des Fertigprodukts liegen die Eigenschaften der Fertigteile, die es enthält, vollständig oder teilweise fest. Ein Teil der Eigenschaften der Fertigteile kann nach der Auswahl des Fertigprodukts variabel sein und muss dann noch festgelegt werden. Eigenschaften des Fertigprodukts sind beispielsweise seine Maße, sein Werkstoff, eventuell eine Oberflächenbeschaffenheit. Die Aufzählung ist nicht abschließend. Die Maße des Fertigteils stehen normalerweise fest, wenn das Fertigprodukt, dass das Fertigteil enthält, ausgewählt ist. Der Werkstoff des Fertigteils kann ebenfalls mit der Auswahl des Fertigprodukts festgelegt sein oder kann noch ausgewählt werden.

Anhand der Eigenschaften des Fertigteils, insbesondere seiner Masse und seines Werkstoffs, wird ein Rohling beispielsweise aus einem Lagerbestand ausgewählt, der zur Herstellung des Fertigteils geeignet ist. Es wird insbesondere optimiert aus dem Lagerbestand ausgewählt, d. h. ein Werkstück, das mit wenig Ausschuss zum Fertigteil bearbeitet werden kann oder ein größeres Lagerteil, aus dem ein Rohling heraus getrennt werden kann, der mit wenig Ausschuss zum Fertigteil bearbeitet werden kann, wobei der Rest des Lagerteils als neues Lagerteil für einen oder weitere Rohlinge mit wiederum wenig Ausschuss verwendbar ist. Ausschuss wird entsorgt und ein oder mehrere Reststücke des Lagerteils, aus dem der Rohling gefertigt wird, werden in das Lager als neuer oder geänderter Lagerbestand rückgelagert, wenn der Rohling heraus getrennt worden ist.

Anhand des ausgewählten Rohlings und der Eigenschaften des Fertigteils werden Werkzeuge zur Herstellung des Fertigteils aus dem Rohling ausgewählt und es werden Bearbeitungsschritte, eine Bearbeitungsreihenfolge, das heißt die Abfolge der Bearbeitungsschritte, mit denen der Rohling nacheinander zum Fertigteil bearbeitet wird, festgelegt und es werden Bearbeitungsstationen ausgewählt, auf, an oder in (nachfolgend kurz: in) denen der Rohling nacheinander bis zum Fertigteil bearbeitet wird. Die Auswahl und Festlegung des Rohlings, der Werkzeuge, der Bearbeitungsschritte und Bearbeitungsreihenfolge und der Bearbeitungsstationen erfolgt automatisch nach einem Algorithmus mit einem Computerprogramm.

Die Auswahl der Werkzeuge ist unter anderem abhängig von dem Werkstoff des Rohlings: zur Bearbeitung von beispielsweise Holz oder Kunststoff werden normalerweise andere Werkzeuge verwendet als zur Bearbeitung von beispielsweise Stein oder von Metall. Die Werkzeuge, die zur Herstellung des Fertigteils aus dem Rohling notwendig sind, müssen aus verfügbaren Werkzeugen ausgewählt werden. Dabei kann es alternative Werkzeuge geben, von denen ein geeignetes Werkzeug oder eine Kombination geeigneter Werkzeuge ausgewählt wird. Zu berücksichtigen ist auch, welche Werkzeuge in welcher Bearbeitungsstation verfügbar sind.

Zwischen der Auswahl der Werkzeuge, der Festlegung der Bearbeitungsschritte und Bearbeitungsreihenfolge und der Festlegung der Bearbeitungsstationen, in die der Rohling nacheinander verbracht und mit den dort verfügbaren Werkzeugen bis zum Fertigteil bearbeitet wird, bestehen Wechselbeziehungen: beispielsweise richten sich die Bearbeitungsschritte und die Bearbeitungsreihenfolge nach den verfügbaren Werkzeugen, wobei wiederum zu berücksichtigen ist, welche Werkzeuge in welcher Bearbeitungsstation zur Verfügung stehen. Das Verfahren wird insbesondere dahingehend optimiert, dass ein Werkstück nach Möglichkeit nur einmal in einer Bearbeitungsstation bearbeitet wird. Als Werkstück werden der Rohling und der in verschiedenen Bearbeitungsstufen bearbeitete Rohling bis zum Fertigteil bezeichnet. In Bearbeitungsstufen zwischen dem unbearbeiteten Rohling und dem Fertigteil kann das Werkstück auch als Zwischenteil bezeichnet werden. In einer Bearbeitungsstation kann das Werkstück gleichzeitig und/oder nacheinander mit verschiedenen Werkzeugen bearbeitet werden. Möglich ist in Einzelfällen auch eine Bearbeitung des Rohlings bis zum Fertigteil in einer einzigen Bearbeitungsstation.

Eine Bearbeitungsstation kann einen oder mehrere Roboter aufweisen, der oder die das jeweilige Werkzeug aus einem Werkzeugmagazin entnimmt, das Werkstück bearbeitet und das Werkzeug anschließend wieder in das Werkzeugmagazin verbringt. Eine Bearbeitungsstation kann auch eine Werkzeugmaschine, eine Lackierkabine, eine Schweißstation oder allgemein eine Fügestation und/oder eine Umformmaschine aufweisen. Die Aufzählung ist beispielhaft und nicht abschließend.

Zur Bearbeitung wird das Werkstück in den Bearbeitungsstationen gespannt, worunter eine Festlegung des Werkstücks gegen durch die Bearbeitung auf das Werkstück ausgeübte Kräfte zu verstehen ist. Eine Ausgestaltung der Erfindung sieht vor, dass eine Lage des Werkstücks in der jeweiligen Bearbeitungsstation automatisch festgestellt wird. Das Werkstück wird in eine Solllage für die Bearbeitung ausgerichtet und/oder das Werkstück wird abhängig von seiner Lage in der Bearbeitungsstation bearbeitet.

Gespannt wird das Werkstück in den Bearbeitungsstationen beispielsweise mechanisch beispielsweise mit Spannbacken und/oder Spannpratzen oder in einem Backenfutter, magnetisch, sofern das Werkstück aus einem ferromagnetischen Werkstoff besteht, und/oder pneumatisch mit einer Unterdruck-Spanneinrichtung, insbesondere einem Saugtisch. Die Aufzählung der Spanneinrichtungen und Spannmöglichkeiten ist beispielhaft und nicht abschließend. Die Unterdruck-Spanneinrichtung erzeugt einen Unterdruck, das heißt einen niedrigeren Druck als ein Umgebungsdruck, zwischen dem Werkstück und der Spanneinrichtung, so dass der Umgebungsdruck das Werkstück gegen die Spanneinrichtung beaufschlagt. Saugöffnungen der Unterdruck-Spanneinrichtung sind vorzugsweise einzeln oder in Gruppen an- und abschaltbar und es werden Saugöffnungen, die das Werkstück nicht überdeckt, vorzugsweise abgeschaltet.

Nach einem, nicht unbedingt nach jedem Bearbeitungsschritt, werden Eigenschaften des Werkstücks, insbesondere Maße, eventuell Oberflächenbeschaffenheit, automatisch geprüft und das Werkstück wird nachbearbeitet, wenn die geprüften Eigenschaften außerhalb einer Toleranz liegen. Die Nachbarbearbeitung kann auch für einen späteren Bearbeitungsschritt eventuell in einer anderen Bearbeitungsstation vorgesehen werden.

Auch ein Verschleiß der ausgewählten und verwendeten Werkzeuge wird vorzugsweise automatisch geprüft. Das ist möglich beispielsweise anhand einer Bearbeitungskraft, anhand der Prüfung der Eigenschaften des Werkstücks, insbesondere der Maße, durch Temperaturmessung am Werkzeug und/oder an einer Bearbeitungsstelle des Werkstücks oder beispielsweise auch anhand eines Rundlaufs beziehungsweise von Vibrationen des Werkzeugs während der Bearbeitung. Verschlissene Werkzeuge werden automatisch ersetzt. Bis zum Ersatz verschlissener Werkzeuge sieht eine Ausgestaltung der Erfindung eine Bearbeitung des Werkstücks und/oder nachfolgender Werkstücke mit Ersatzwerkzeugen, die aus den vorhandenen Werkzeugen ausgewählt werden und mit denen die Herstellung beziehungsweise Fertigstellung des Fertigteils möglich ist.

Eine bevorzugte Ausgestaltung der Erfindung sieht vor, dass beispielsweise ein Kunde ein Fertigprodukt an einem mobilen Computer, insbesondere an einem Smartphone oder einem Tabletcomputer auswählt, das ein oder mehrere Fertigteile enthält, die mit dem erfindungsgemäßen Verfahren herstellbar sind. Der mobile Computer stellt virtuell Fertigprodukte zur Verfügung, die ein oder mehrere Fertigteile enthalten, die wie gesagt mit dem erfindungsgemäßen Verfahren herstellbar sind. Das Fertigprodukt kann weitere Bauteile, beispielsweise Zukaufteile oder in anderer Weise hergestellte Teile aufweisen. Das oder die mit dem erfindungsgemäßen Verfahren herstellbaren Fertigteile werden erfindungsgemäß hergestellt.

Eine Weiterbildung sieht vor, dass ein Raum, beispielsweise ein Zimmer, mit dem mobilen Computer erfasst und das ausgewählte Fertigprodukt auf einem Bildschirm des Computers in dem Raum dargestellt wird. Erfasst werden Maße des Raums, Fenster und Türen, Wandfarben und dergleichen. Der Kunde kann sich das Fertigprodukt in dem Raum auf dem Bildschirm des Computers ansehen, vorzugsweise aus verschiedenen Richtungen. Er kann Oberflächen, Werkstoffe, Farben und Maße wählen, ändern und anpassen. Auf diese Weise werden die Eigenschaften des Fertigteils festgelegt, anhand derer der Rohling, die Bearbeitungsschritte, die Werkzeuge usw. automatisch nach einem Algorithmus beziehungsweise mit einem Computerprogramm ausgewählt werden. Nach der Erfassung des Raums kann automatisch auch geprüft werden, ob das ausgewählte Fertigprodukt mit seiner Form, Größe, eventuell dem Gewicht an einer vom Kunden ausgewählten Stelle in den Raum passt. Ggf. können Anpassungen, beispielsweise Ausnehmungen am Fertigprodukt vorgesehen werden, die an dem oder den Werkstücken vorgenommen werden müssen. Auch das erfolgt erfindungsgemäß automatisch mit dem Algorithmus beziehungsweise dem Computerprogramm.

Sämtliche in der Beschreibung genannte und/oder der Zeichnung dargestellte Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs, aufweisen, sind möglich.

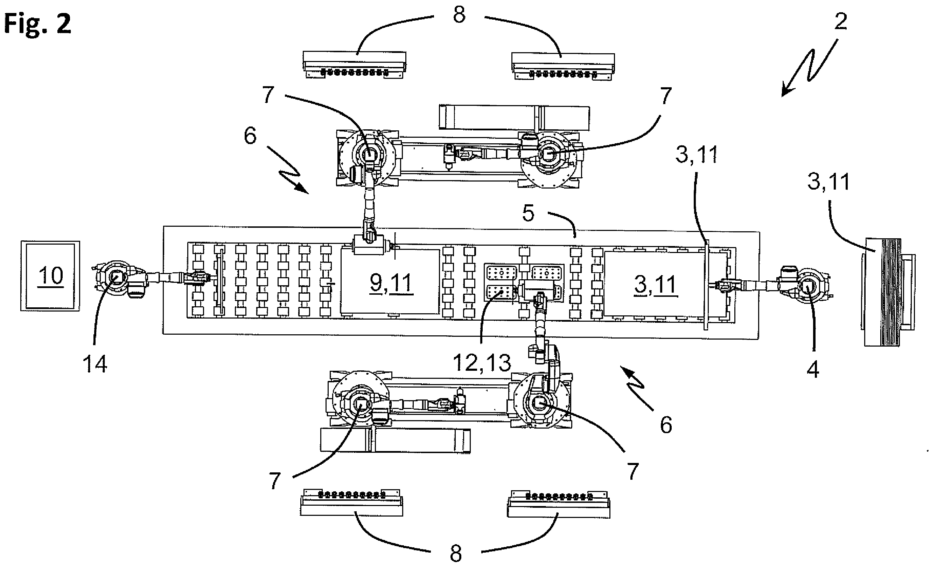

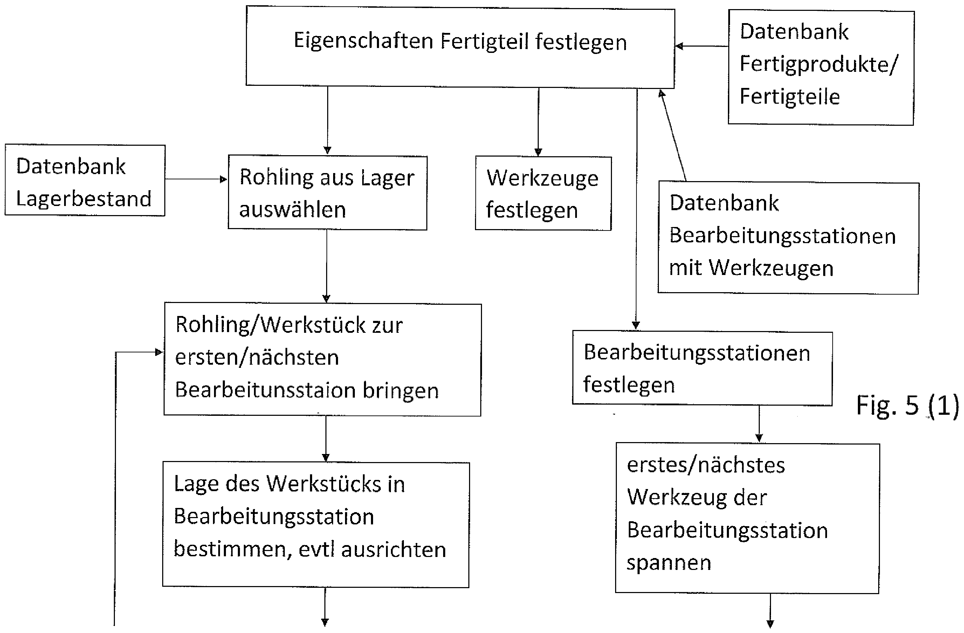

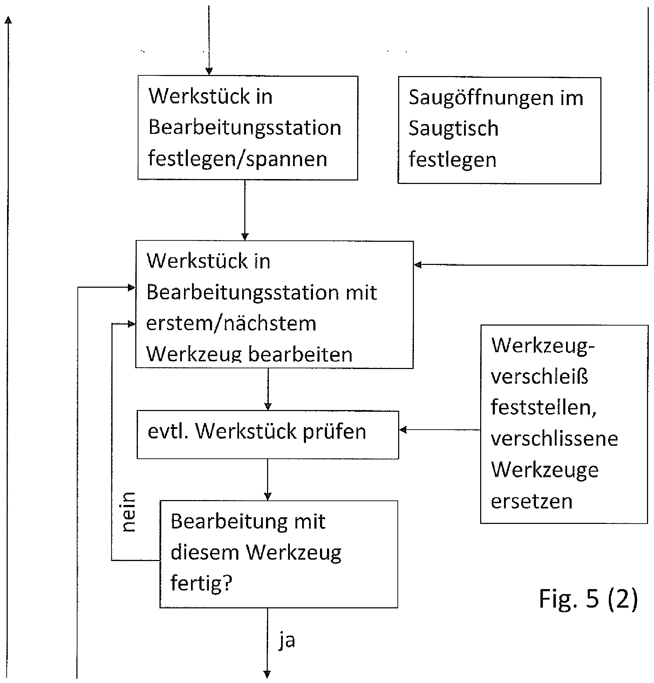

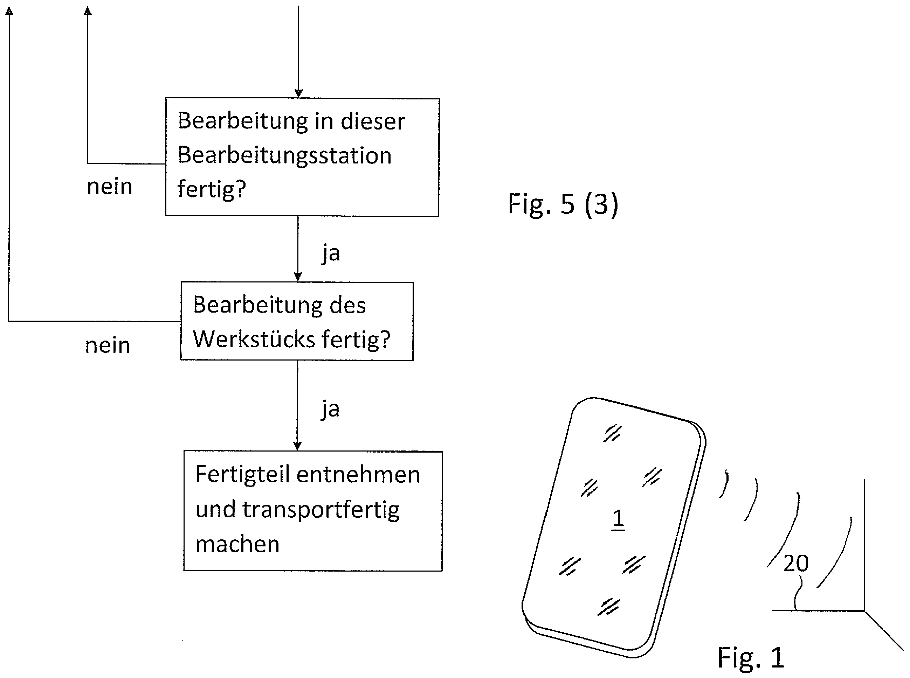

Die Erfindung wird nachfolgend anhand eines mobilen Computers, der in Figur 1 dargestellt ist, zweier Fertigungsstraßen, die in Figuren 2 bis 4 dargestellt sind, und eines Programmablaufplans, der in Figur 5 dargestellt ist, erläutert. Insbesondere die Figuren 1 bis 4 sind vereinfachte Darstellungen.

Die Erfindung dient einer vollautomatischen Herstellung von Fertigteilen aus Rohlingen. Bearbeitungsstufen der Rohlinge zwischen den unbearbeiteten Rohlingen und den Fertigteilen werden hier auch als Zwischenteile und die Rohlinge, Zwischenteile und Fertigteile auch als Werkstücke bezeichnet. Ziel der Erfindung ist eine vollautomatische oder jedenfalls weitestgehend automatische Herstellung von Fertigteilen für ein Fertigprodukt, das die Fertigteile enthält. Das Fertigprodukt kann auch aus nur einem Fertigteil bestehen oder weitere Fertigteile enthalten, die in anderer Weise hergestellt beziehungsweise zugekauft werden.

Am Anfang des erfindungsgemäßen Verfahrens steht eine Festlegung von Eigenschaften des oder der herzustellenden Fertigteile. Solche Eigenschaften sind insbesondere Maße beziehungsweise Geometrie und Werkstoff/e des oder der Fertigteile. Weitere Eigenschaften können Farbe und Struktur von Oberflächen der Fertigteile sein.

Zur Festlegung der Eigenschaften der Fertigteile sieht eine Ausgestaltung der Erfindung eine Auswahl eines Fertigprodukts mit einem mobilen Computer 1, beispielsweise einem Laptop, Tabletcomputer oder Smartphone vor. Der mobile Computer 1 enthält oder hat Zugriff auf eine Datenbank mit einer Auswahl an Fertigprodukten. Durch das ausgewählte Fertigprodukt sind das oder die herzustellenden Fertigteile und deren Eigenschaften festgelegt.

Eine bevorzugte Variante des erfindungsgemäßen Verfahrens sieht eine Ausmessung eines Raums, in dem das ausgewählte Fertigprodukt angeordnet werden soll, mit dem mobilen Computer 1 vor. Der Raum ist beispielsweise ein Zimmer in einem Gebäude. Zur Ausmessung des Raums wird der Raum insbesondere mit einer Kamera des mobilen Computers 1 mit verschiedenen Blickrichtungen aufgenommen, was schematisch in Figur 1 auf Blatt 6/6 rechts unten mit einer Raumecke 20 dargestellt ist. Die Aufnahmen können Fotos und/oder Videos sein. Die Aufnahmen müssen kalibriert werden, wozu beispielsweise Abstände von Ecken des Raums gemessen und in ein Computerprogramm, beispielsweise auch eine App, das/die in dem mobilen Computer 1 gespeichert ist, eingegeben werden. Welche Abstände gemessen werden müssen gibt vorzugsweise das Computerprogramm anhand der aufgenommenen Fotos und/oder Videos an. Es kann jetzt das ausgewählte Fertigprodukt in dem Raum auf einem Bildschirm des mobilen Computers 1 dargestellt werden. Das Fertigprodukt, insbesondere seine Maße, Werkstoffe und Oberflächen, können jetzt noch geändert werden oder es kann ein anderes Fertigprodukt ausgewählt werden. Das Computerprogramm prüft, ob das ausgewählte Fertigprodukt in den Raum passt. Eine weitere Möglichkeit ist, Änderungen am Fertigprodukt beziehungsweise in den Fertigteilen, die es enthält, vorzunehmen. Beispielsweise können Öffnungen und Aussparungen für Leitungen, Steckdosen oder in den Raum ragenden Vorsprüngen an den herzustellenden Fertigteilen vorgesehen werden.

Eine andere Festlegung der Eigenschaften des oder der herzustellenden Fertigteile, beispielsweise auch eine manuelle Eingabe, ist möglich.

Hergestellt werden die Fertigteile beispielsweise mit einer Fertigungsstraße 2, wie sie in Figur 2 gezeichnet ist. Rohlinge 3 werden aus einem nicht dargestellten Lager, beispielsweise einem vollautomatischen Regallager, entnommen und beispielsweise mit einem nicht dargestellten, selbstfahrenden Flurförderfahrzeug zur Fertigungsstraße 2 gebracht. Ein erster Roboter 4 legt die Rohlinge 3 nacheinander an einem Ende auf einen Rollenförderer 5 der Fertigungsstraße 2. Der Rollenförderer 5 kann allgemein auch als Förderanlage aufgefasst werden.

Der Rollenförderer 5 fördert die Rohlinge 3 zu in einer Förderrichtung nacheinander am Rollenförderer 5 angeordneten Bearbeitungsstationen 6. Im Ausführungsbeispiel weist die Fertigungsstraße 2 zwei Bearbeitungsstationen 6 mit jeweils zwei Robotern 7 auf, die einander gegenüber auf beiden Seiten des Rollenförderers 5 angeordnet sind. Jedem Roboter 7 ist ein Werkzeugmagazin 8 zugeordnet, aus dem er Werkzeuge zur Bearbeitung der Rohlinge 3 entnehmen kann. Durch die Bearbeitung entstehen aus den Rohlingen 3 wie gesagt Zwischenteile 9 und am Ende der Bearbeitung die Fertigteile 10. Die Rohlinge 3, Zwischenteile 9 und Fertigteile 10 können auch als Werkstücke 11 aufgefasst werden.

Jede Bearbeitungsstation 6 weist eine Spanneinrichtung 12 zum Festlegen der Werkstücke 11 während der Bearbeitung auf. Die Bearbeitungsstationen 6 können beispielsweise mechanische Spanneinrichtungen mit beispielsweise Spannbacken und/oder Spannpratzen, elektromagnetische Spanneinrichtungen für ferromagnetische Werkstücke oder - wie im Ausführungsbeispiel gezeigt - einen Saugtisch 13 als Spanneinrichtung 12 aufweisen.

Nachdem der Rohling 3 in den Bearbeitungsstationen 6 zu dem Fertigteil 10 bearbeitet worden ist, fördert ihn der Rollenförderer 5 zu einem dem Ende, an dem der Rohling 3 vom ersten Roboter 4 auf den Rollenförderer 5 gelegt worden ist, gegenüberliegenden Ende, wo ein letzter Roboter 14 die Fertigteile 10 vom Rollenförderer 5 nimmt und beispielsweise für einen Versand stapelt.

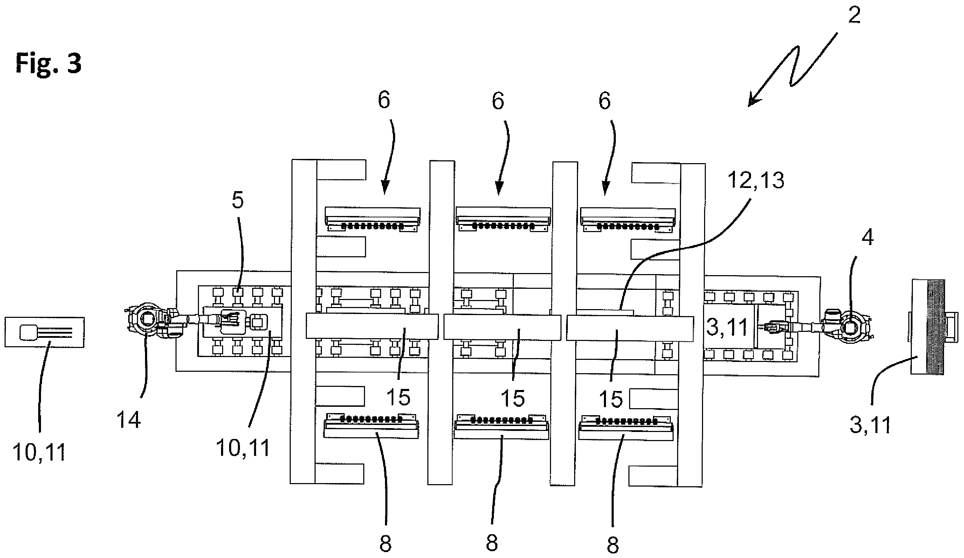

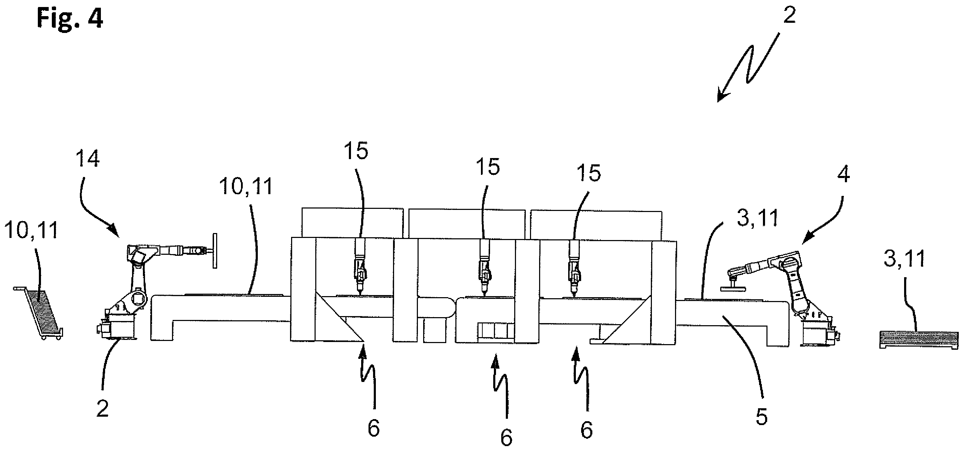

Figuren 3 und 4 zeigen eine alternative Fertigungsstraße 2 mit Werkzeugmaschinen 15 an den Bearbeitungsstationen 6. Gezeigt sind in Figuren 3 und 4 Portalwerkzeugmaschinen 15. Möglich ist auch eine Kombination von Robotern 7 und Werkzeugmaschinen 15. Die Fertigungsstraße 2 kann auch eine oder mehrere Fügestationen, beispielsweise Schweißstationen, Lötstationen und/oder Klebestationen, Umformstationen, Lackierkabinen beziehungsweise Lackiererstationen und/oder Folierstationen aufweisen (nicht dargestellt). Die Aufzählung ist beispielhaft und nicht abschließend.

Auf Grundlage der Eigenschaften des oder der herzustellenden Fertigteile wählt das erfindungsgemäße Verfahren, das beispielsweise als Computerprogramm verwirklicht sein kann, einen oder mehrere nach Form, Größe und Werkstoff zur Herstellung der Fertigteile geeignete Rohlinge aus einem Lagerbestand aus, wozu das Computerprogramm Zugriff auf eine Datenbank mit dem Lagerbestand an Rohlingen hat, die das Computerprogramm aktualisiert. Das erfindungsgemäße Verfahren ist als Flussdiagramm bzw. Ablaufplan in Figur 5 dargestellt. Für die Herstellung des Fertigteils 10 wird ein Lagerteil ausgewählt, aus dem der Rohling 3 bzw. das Fertigteil 10 mit möglichst wenig Ausschuss herstellbar ist. Ein für weitere, auch andere Fertigteile verwendbarer Rest bzw. Reste des Lagerteils werden in das Lager rückgelagert und der Lagerbestand in der Datenbank aktualisiert. Ausschuss wird entsorgt.

Außerdem legt das erfindungsgemäße Verfahren zur Herstellung des Fertigteils geeignete Werkzeuge aus und legt Bearbeitungsschritte, eine Bearbeitungsreihenfolge und Bearbeitungsstationen, in denen die Bearbeitungsschritte durchgeführt werden, fest. Ein Bearbeitungsschritt ist die Bearbeitung eines Werkstücks mit einem Werkzeug. Es können alternative Werkzeuge für die Herstellung des Fertigteils vorhanden sein, aus denen das Verfahren eine Auswahl trifft, mit denen die Herstellung des Fertigprodukts möglich ist. Die Auswahl der Werkzeuge, Bearbeitungsschritte, Bearbeitungsreihenfolge und Bearbeitungsstationen sind voneinander und vom Rohling, insbesondere von dessen Werkstoff abhängig. Auch welche Werkzeuge in welcher Bearbeitungsstation verfügbar sind, beeinflusst die Auswahlen und Festlegungen. Die Werkzeuge, Bearbeitungsschritte und Bearbeitungsreihenfolge werden vorzugsweise so festgelegt, dass die Werkstücke nacheinander von einer vorangehenden zu einer nachfolgenden Bearbeitungsstation verbracht werden können und möglichst nur einmal zu beziehungsweise in eine Bearbeitungsstation gelangen. In jeder Bearbeitungsstation kann ein oder können mehrere Bearbeitungsschritte mit einem oder mehreren Werkzeugen durchgeführt werden. Für die Auswahl der Werkzeuge und Festlegung der Bearbeitungsschritte, Bearbeitungsreihenfolge und Bearbeitungsstationen hat das erfindungsgemäße Verfahren beziehungsweise das ihm zugrunde liegendes Computerprogramm Zugriff auf eine oder mehrere Werkzeugdatenbanken, in denen die Werkzeuge, die an den Bearbeitungsstationen zur Verfügung stehen, oder allgemein auch in den Bearbeitungsstationen mögliche Bearbeitungsschritte, gespeichert sind.

Der ausgewählte Rohling wird - vorzugsweise automatisch - aus dem Lager entnommen zur Fertigungsstraße beziehungsweise zu einer (ersten) Bearbeitungsstation verbracht. Die Datenbank mit dem Lagerbestand an Rohlingen wird aktualisiert. In der Bearbeitungsstation wird eine Lage des Rohlings, der auch als Werkstück aufgefasst werden kann, automatisch bestimmt und/oder der Rohling in eine vorgesehene Lage ausgerichtet und festgespannt. Sofern eine Spanneinrichtung zum Spannen des Werkstücks während der Bearbeitung eine Saugeinrichtung, beispielsweise einen Saugtisch aufweist, werden, wenn möglich, Saugöffnungen, die von dem Werkstück überdeckt sind, eingeschaltet und Saugöffnungen außerhalb des Werkstücks abgeschaltet.

Während die Lage des Werkstücks in der Bearbeitungsstation bestimmt und das Werkstück ausgerichtet und festgespannt wird, entnimmt ein Roboter, eine Werkzeugmaschine oder dergleichen der Bearbeitungsstation ein erstes, festgelegtes Werkzeug aus dem zugeordneten Werkzeugmagazin und spannt es. Anschließend wird das Werkstück mit dem Werkzeug bearbeitet, was als Bearbeitungsschritt bezeichnet wird. Die Bearbeitung kann beispielsweise eine spanende, spanlose, umformende und/oder fügende Bearbeitung sein. Die Aufzählung ist beispielhaft und nicht abschließend. Ein Werkstück kann in einer Bearbeitungsstation auch gleichzeitig mit mehreren Werkzeugen bearbeitet werden.

Nach der Bearbeitung, also nach einem Bearbeitungsschritt kann das Werkstück auf Maßhaltigkeit, Oberflächengüte usw. geprüft werden. Eventuell erfolgt eine Nachbearbeitung des Werkstücks in derselben Bearbeitungsstation mit demselben Werkzeug. Eine Nachbearbeitung des Werkstücks kann auch mit einem später zum Einsatz kommenden Werkzeug und/oder in einer nachfolgenden Bearbeitungsstation vorgesehen werden.

Vor, während oder nach der Bearbeitung des Werkstücks kann das jeweils verwendete Werkzeug auf Verschleiß geprüft werden. Die Verschleißprüfung erfolgt vorzugsweise automatisch. Möglich ist auch eine Verschleißprüfung der Werkzeuge im Werkzeugmagazin insbesondere nach ein oder mehreren Benutzungen eines Werkzeugs. Eine Verschleißprüfung ist beispielsweise optisch möglich und/oder es wird eine Verschleißmessung durchgeführt. Während der Bearbeitung des Werkstücks kann beispielsweise eine Vorschubkraft oder ein Antriebsmoment des Werkstücks und/oder eine Temperatur an einer Bearbeitungsstelle gemessen werden. Sind die Messwerte höher als zu erwarten, ist das ein Hinweis auf einen Verschleiß des Werkzeugs. Verschlissene Werkzeuge werden in dem Werkzeugmagazin ersetzt. Bis ein verschlissenes Werkzeug ersetzt ist, kann das erfindungsgemäße Verfahren ein oder eventuell auch mehrere alternative Werkzeuge auswählen, die in der Bearbeitungsstation oder einer nachfolgenden Bearbeitungsstation verfügbar sind und mit denen die Herstellung des Fertigteils möglich ist.

Ist die Bearbeitung des Werkstücks mit dem Werkzeug fertig, wird das Werkzeug automatisch zurück in das Werkzeugmagazin verbracht und ein für einen folgenden Bearbeitungsschritt festgelegtes Werkzeug aus dem Werkzeugmagazin entnommen, mit dem das Werkstück anschließend in der Bearbeitungsstation weiter bearbeitet wird.

Ist die Bearbeitung des Werkstücks in der Bearbeitungsstation fertig, wird das Werkstück zur festgelegten nächsten Bearbeitungsstation verbracht und dort in vorstehend erläuterter Weise mit den festgelegten Werkzeugen bearbeitet.

Ist das Werkstück fertig, das heißt das Fertigteil hergestellt, wird es - vorzugsweise automatisch beispielsweise von einem Roboter - aus der (letzten) Bearbeitungsstation oder von der Fertigungsstraße entnommen. Vorzugsweise werden alle Fertigteile, die einem Fertigprodukt zugeordnet sind, zusammengestellt und zum Verpacken und Versand bereit gestellt, beispielsweise gestapelt.

## Patentansprüche

1. Verfahren zur Herstellung eines Fertigteils aus einem Rohling, **dadurch gekennzeichnet, dass** Eigenschaften des Fertigteils festgelegt werden, dass ein zur Herstellung des Fertigteils geeigneter Rohling ausgewählt wird, dass zur Herstellung des Fertigteils aus dem ausgewählten Rohling geeignete Werkzeuge ausgewählt werden, dass zur Herstellung des Fertigteils geeignete Bearbeitungsschritte und eine Bearbeitungsreihenfolge festgelegt werden und dass zur Herstellung des Fertigteils aus dem Rohling geeignete Bearbeitungsstationen ausgewählt werden.

2. Verfahren nach Anspruch 1, **dadurch gekennzeichnet, dass** die zur Herstellung des Fertigteils aus dem ausgewählten Rohling geeigneten Bearbeitungsschritte und die Bearbeitungsreihenfolge unter Berücksichtigung der ausgewählten Werkzeuge festgelegt werden und/oder dass die zur Herstellung des Fertigteils aus dem Rohling geeignete Bearbeitungsstationen unter Berücksichtigung der ausgewählten Werkzeuge, der Bearbeitungsschritte und der Bearbeitungsreihenfolge ausgewählt werden.

3. Verfahren nach Anspruch 1 oder 2, **dadurch gekennzeichnet, dass** der ausgewählte Rohling zu einer oder nacheinander zu mehreren Bearbeitungsstationen verbracht, gespannt und zu dem Fertigteil oder zu einem Zwischenteil bearbeitet wird, das zu einer nächsten Bearbeitungsstation verbracht, gespannt und weiter zu einem Zwischenteil bearbeitet wird, bis das Fertigteil in einer letzten Bearbeitungsstation hergestellt ist.

4. Verfahren nach Anspruch 3, **dadurch gekennzeichnet, dass** eine Lage des Rohlings oder Zwischenteils in der Bearbeitungsstation festgestellt, eventuell der Rohling oder das Zwischenteil ausgerichtet und der Rohling oder das Zwischenteil abhängig von seiner Lage in der Bearbeitungsstation bearbeitet wird.

5. Verfahren nach einem oder mehreren der vorhergehenden Ansprüche, **dadurch gekennzeichnet, dass** die Bearbeitungsstation eine Unterdruck-Spanneinrichtung zum Spannen des Rohlings oder des Zwischenteils aufweist.

6. Verfahren nach Anspruch 5, **dadurch gekennzeichnet, dass** die Unterdruck-Spanneinrichtung mehrere Saugöffnungen aufweist und dass Saugöffnungen, die nicht von dem Rohling oder dem Zwischenteil bedeckt sind, abgeschaltet werden.

7. Verfahren nach einem oder mehreren der vorhergehenden Ansprüche, **dadurch gekennzeichnet, dass** nach einer Bearbeitung in einer Bearbeitungsstation Eigenschaften des Zwischenteils oder des Fertigteils automatisch geprüft werden und das Zwischenteil oder das Fertigteil erforderlichenfalls nachbearbeitet wird.

8. Verfahren nach einem oder mehreren der vorhergehenden Ansprüche, **dadurch gekennzeichnet, dass** die ausgewählten Werkzeuge automatisch auf Verschleiß geprüft und verschlissene Werkzeuge automatisch ersetzt werden.

9. Verfahren nach Anspruch 8, **dadurch gekennzeichnet, dass** automatisch Ersatzwerkzeuge aus vorhandenen Werkzeugen für verschlissene Werkzeuge ausgewählt werden, so lange die verschlissenen Werkzeuge nicht ersetzt sind.

10. Verfahren nach einem oder mehreren der vorhergehenden Ansprüche, **dadurch gekennzeichnet, dass** an einem mobilen Computer (1) ein Fertigprodukt ausgewählt wird, das ein oder mehrere Fertigteile enthält, die mit dem Verfahren hergestellt werden.

11. Verfahren nach Anspruch 10, **dadurch gekennzeichnet, dass** mit dem mobilen Computer (1) ein Raum erfasst und das Fertigprodukt in dem Raum dargestellt wird.
